(19) Europäisches Patentamt
European Patent Office
Office européen des brevets

(11) **EP 2 381 252 A2**

(12) **EUROPEAN PATENT APPLICATION**

(43) Date of publication:
26.10.2011 Bulletin 2011/43

(51) Int Cl.:
*G01N 30/56* (2006.01)     *G01N 30/60* (2006.01)

(21) Application number: 11250484.0

(22) Date of filing: 18.04.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 22.04.2010 US 765498

(71) Applicant: Asahi Kasei Bioprocess, Inc.
Glenview, IL 60026 (US)

(72) Inventors:
• Brandt, Michael
Glenview, IL 60026 (US)
• Dunn, Mark
Glenview, IL 60026 (US)
• Bellafiore, Louis
Glenview, IL 60026 (US)

(74) Representative: Dauncey, Mark Peter et al
Marks & Clerk LLP
1 New York Street
Manchester, M1 4HD (GB)

(54) **System and method for controlling pressure in a processing column**

(57)     A processing column system includes an inlet, an outlet, a piston head and a piston pressure chamber for providing a controlled bed pressure to the piston head and thus to a substrate and/or liquid bed positioned within the column. A tracking regulator is in fluid communication with a source of pressurized hydraulic fluid and the piston pressure chamber as well as the inlet to the column. The tracking regulator receives a pressure of a process fluid flow into the processing column. The tracking regulator has a hydraulic fluid drain port in fluid communication with the source of pressurized hydraulic fluid. The tracking regulator directs hydraulic fluid from the piston pressure chamber to the source of pressurized hydraulic fluid when the tracking regulator detects a drop in the pressure of the process fluid flow. The source of pressurized hydraulic fluid provides to the tracking regulator a pressure equal to a set bed pressure of the system plus a maximum anticipated process flow pressure. The tracking regulator directs additional hydraulic fluid from the source of pressurized hydraulic fluid to the piston pressure chamber of the processing column so that a pressure therein is greater than the set bed pressure when the tracking regulator detects an increase in the pressure of the process fluid flow.

**FIG. 1**

EP 2 381 252 A2

## Description

## FIELD OF THE INVENTION

The present invention relates generally to processing columns and, in particular, to a tracking regulator system and method for processing columns.

## BACKGROUND

Processing columns are used in many industrial processes at various pressure ratings. For example, the use of large scale chromatography to purify raw materials, intermediates and end products is common in many industrial segments including pharmaceutical products, biopharmaceutical products, nutraceutical products, food and beverage products, household products, personal care products, petroleum products, chemical products and other specialty products. In addition, certain industries, such as the biopharmaceutical industry, require the use of multiple chromatographic purification steps for every product made.

Processing columns typically require both the formation and maintenance of a homogenous bed of particulate substrate material (such as polymeric or silica gel based chromatography medias) within the column. For the sake of efficiency, the arrangement of particulate material inside the column should be as homogeneous as possible. In addition, empty volumes between the bed of particulate substrate material and the column inlets and outlets must be avoided. The state of the art in large-scale column chromatography utilizes a technology referred to as "dynamic axial compression" to address these issues. In dynamic axial compression, an adjustable position piston head is used to compress the substrate particulate material, usually of a size between 5 and 100 microns, within the column. The piston head is dynamically moved by means of pneumatic or hydraulic pressure. The force on the piston may be applied externally of the column via a rod or internally by pressuring the column on one side of the piston.

In processing column applications, fluctuations in the substrate bed volume occur due to settling, shrinking and swelling of the bed material, especially when such material is of a compressible nature and the shrinking or expansion of the bed is due not only to hydraulic forces of flow through the bed, but from the added effect of pH, solvent concentration or salt concentration. Another problem is that the operation of eluent pumps is not free of pulsations. This results in a variable mechanical stress on the bed as well.

A need therefore exists for a system and method that maintains the bed integrity by compensating for dynamic changes in bed pressure based on real time monitoring of the process liquid flow pressure.

According to a first aspect of the present invention there is provided a system for controlling a bed pressure of a processing column, where a piston pressure chamber causes a piston head of the processing column to apply the bed pressure to a bed of the processing column and where the processing column features an inlet and an outlet in fluid communication with the bed, the system comprising:

a) a source of pressurized hydraulic fluid;
b) a tracking regulator having a pressure sensing input, a hydraulic fluid inlet in fluid communication with the source of pressurized hydraulic fluid and a hydraulic fluid outlet adapted for fluid communication with the piston pressure chamber;
c) said tracking regulator pressure sensing input adapted for fluid communication with the processing column inlet so that the tracking regulator may receive a pressure of a process fluid flow into the processing column; and
d) said tracking regulator responding to changes in the pressure of the process fluid flow by adjusting a pressure of the piston pressure chamber.

In the system of the first asepct of the present invention it is preferred that the tracking regulator includes a hydraulic fluid drain port and further comprising a hydraulic fluid drain line in fluid communication with the hydraulic fluid drain port of the tracking regulator and the source of pressurized hydraulic fluid, said tracking regulator adapted to direct hydraulic fluid from the piston pressure chamber to the hydraulic fluid drain line and the source of pressurized hydraulic fluid when the tracking regulator detects a drop in the pressure of the process fluid flow.

In the system of the first asepct of the present invention the source of pressurized hydraulic fluid preferably includes a hydraulic liquid reservoir and a pump having an inlet in fluid communication with the hydraulic liquid reservoir and an outlet in fluid communication with the hydraulic fluid inlet of the tracking regulator. The system may further comprise an electronic controller connected to and controlling the pump so that a set bed pressure may be entered into the controller.

The system according to the first aspect preferably further comprises a sensing diaphragm in fluid communication with the pressure sensing input of the tracking regulator and adapted for fluid communication with the processing column input so that the tracking regulator may receive the pressure of the process fluid flow into the processing column. The system may further comprise a capillary in fluid communication with the sensing diaphragm and adapted for fluid communication with the processing column input so that the sensing diaphragm and the tracking regulator may receive the pressure of the process fluid flow into the processing column.

It is preferred in the system according to the first asepct that the source of pressurized hydraulic fluid provides to the hydraulic fluid input of the tracking regulator a pressure equal to a set bed pressure of the system plus a maximum anticipated process flow pressure, said tracking regulator adapted to direct additional hydraulic fluid from the source of pressurized hydraulic fluid to the piston pressure chamber so that a pressure therein is greater than the set bed pressure when the tracking regulator detects an increase in the pressure of the process fluid flow.

A second aspect of the present invention provides a processing column system comprising:

a) a processing column featuring an inlet, an outlet and a processing column piston head, said processing column also including a bed positioned adjacent to said processing column piston head and in fluid communication with the processing column inlet and outlet,

b) a piston pressure chamber for causing the processing column piston head to provide a bed pressure to the bed;

c) a source of pressurized hydraulic fluid;

d) a tracking regulator having a pressure sensing input, a hydraulic fluid inlet in fluid communication with the source of pressurized hydraulic fluid and a hydraulic fluid outlet in fluid communication with the piston pressure chamber;

e) said tracking regulator pressure sensing input in fluid communication with the processing column inlet so that the tracking regulator may receive a pressure of a process fluid flow into the processing column; and

f) said tracking regulator responding to changes in the pressure of the process fluid flow by adjusting a pressure of the piston pressure chamber.

In the system according to the second aspect of the present invention it is preferred that the piston pressure chamber is internal to the processing column and positioned between the processing column piston head and a top plate of the processing column.

The system according to the second aspect preferably further comprises a piston rod connected to the processing column piston on a first end of the piston rod and an external driving column containing a driving piston with the piston pressure chamber positioned adjacent to the driving piston within the external driving column, said driving piston connected to the piston rod on a second end of the piston rod opposite the first end.

In the system of the second aspect the column inlet may include a process fluid port and may further comprise a rod connected to the piston head wherein the column outlet includes a fluid passage formed through said rod.

In the system of the second aspect the column outlet may includes a process fluid port and may further comprise a rod connected to the piston head wherein the column inlet includes a fluid passage formed through said rod.

It is preferred in the system of the second aspect that the tracking regulator includes a hydraulic fluid drain port and further comprises a hydraulic fluid drain line in fluid communication with the hydraulic fluid drain port of the tracking regulator and the source of pressurized hydraulic fluid, said tracking regulator directing hydraulic fluid from the piston pressure chamber to the hydraulic fluid drain line and the source of pressurized hydraulic fluid when the tracking regulator detects a drop in the pressure of the process fluid flow.

In the system of the second aspect the source of pressurized hydraulic fluid preferably includes a hydraulic liquid reservoir and a pump having an inlet in fluid communication with the hydraulic liquid reservoir and an outlet in fluid communication with the hydraulic fluid inlet of the tracking regulator and preferably further comprises an electronic controller connected to and controlling the pump so that a set bed pressure may be entered into the controller.

The system according to the second aspect of the present invention preferably further comprises a sensing diaphragm in fluid communication with the pressure sensing input of the tracking regulator and in fluid communication with the processing column input so that the tracking regulator receives the pressure of the process fluid flow into the processing column. The system may further comprise a capillary in fluid communication with the sensing diaphragm and in fluid communication with the processing column input so that the sensing diaphragm and the tracking regulator receive the pressure of the process fluid flow into the processing column.

In the system of the second aspect it is preferred that the source of pressurized hydraulic fluid provides to the hydraulic fluid input of the tracking regulator a pressure equal to a set bed pressure of the system or plus a maximum anticipated process flow pressure, said tracking regulator adapted to direct additional hydraulic fluid from the source of pressurized hydraulic fluid to the piston pressure chamber so that a pressure therein is greater than the set bed pressure when the tracking regulator detects an increase in the pressure of the process fluid flow.

A third aspect of the present invention provides a method of controlling a bed pressure of a processing column, where a piston pressure chamber causes a piston head of the processing column to apply the bed pressure to a bed of the processing column and where the processing column features an inlet and an outlet in fluid communication with the bed, the method comprising the steps of:

a) providing pressurized hydraulic fluid to the piston pressure chamber from a source of pressurized hydraulic fluid through a tracking regulator;

b) sensing a pressure of a process fluid flow into the processing column with the tracking regulator; and

c) adjusting a pressure of the piston pressure chamber using the tracking regulator based on the sensed pressure of the process fluid flow.

In the method according to the third aspect of the present invention it is preferred that the tracking regulator includes a hydraulic fluid drain port and further comprising a hydraulic fluid drain line in fluid communication with the hydraulic fluid drain port of the tracking regulator and the source of pressurized hydraulic fluid, and that the method preferably further comprises the step of directing hydraulic fluid from the piston pressure chamber to the hydraulic fluid drain line and the source of pressurized hydraulic fluid when the tracking regulator detects a drop in the pressure of the process fluid flow.

It is preferred in the method according to the third aspect of the present invention that the source of pressurized hydraulic fluid provides to the tracking regulator a pressure equal to a set bed pressure of the system plus a maximum anticipated process flow pressure, and that the method preferably further comprises the step of directing additional hydraulic fluid from the source of pressurized hydraulic fluid to the piston pressure chamber so that a resulting pressure therein is greater than the set bed pressure when the tracking regulator detects an increase in the pressure of the process fluid flow.

## BRIEF DESCRIPTION OF THE DRAWINGS

Fig. 1 is a schematic illustrating an embodiment of the tracking regulator system and method of the present invention including an internal piston pressure chamber;

Fig. 2 is a schematic illustrating an embodiment of the tracking regulator system and method of the present invention including an external driving column containing the piston pressure chamber.

## DETAILED DESCRIPTION OF EMBODIMENTS

While the embodiment of the system and method of the present invention is described below in terms of liquid chromatography, it is to be understood that the invention is not so limited and that it may alternatively be applied to other processes involving processing columns such as filtration, solid phase synthesis, capture and adsorption as well as other types of chromatography, including gas and supercritical fluid.

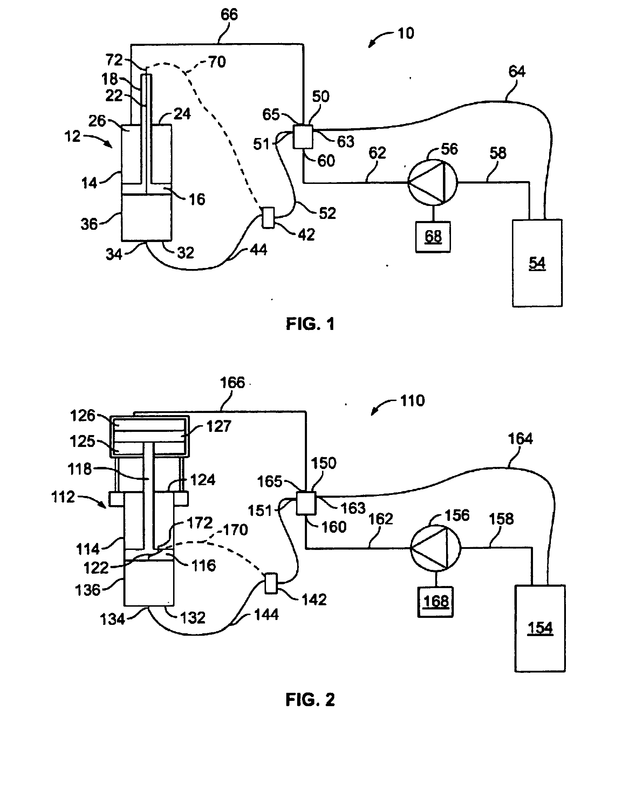

An embodiment of the system of the present invention is indicated in general at 10 in Fig. 1. A processing column 12 includes a vertically disposed cylinder or column 14 within which is positioned a sliding piston featuring a processing column piston head 16 and a piston rod 18. A process fluid passage 22 is formed through the piston rod. The column 14 is provided with a top plate 24 including a central opening through which the piston rod passes. A piston pressure chamber 26 is formed between the top plate and the piston head. The column 14 is also provided with a bottom plate 32 having a process fluid port 34 formed therein.

A substrate bed 36 of particulate material is positioned between the bottom surface of the piston head and the bottom plate. The bed 36 may alternatively be a single piece (monolithic or membrane) bed or a liquid suspension of cells (such as is used in fermentation using yeast, or a bioreactor using plant of animal cells). The substrate bed 36 may be porous or non-porous and may include polymeric material or gel, including a base structure that is constructed from cellulose, methacrylate, divinyl benzene, silica, zeolite, titanium or is of the type used in any other separation medium.

The system includes a sensing diaphragm 42 that is in fluid communication with port 34 of the processing column 12 via a capillary line 44 containing a fluid such as air or a liquid. The system also includes a tracking regulator 50 which features a pressure sensing input 51 that is in fluid communication with the sensing diaphragm 42 via a liquid-filled line 52. As will be explained in greater detail below, the tracking regulator also allows a bias pressure to be added to the pressure acting on the piston head 16 based on the process liquid flow pressure feedback provided by sensing diaphragm 42.

A hydraulic liquid reservoir 54 communicates with the inlet of a hydraulic pump 56 via line 58, while the outlet of the pump communicates with a hydraulic fluid inlet 60 of the tracking regulator 50 via line 62. The tracking regulator is also in fluid communication with the hydraulic liquid reservoir 54 via a hydraulic fluid drain port and line, indicated at 63 and 64, respectively. The tracking regulator 50 also features a hydraulic fluid outlet 65 that is in fluid communication with the piston pressure chamber 26 of the processing column via line 66. The operation of pump 56 is controlled by electronic controller 68. Electronic controller 68 may be a microprocessor or any other electronic control device known in the art.

In operation, a set bed pressure $P_s$ for the substrate bed 36 is selected and entered into controller 68. This initiates the operation of pump 56 so that hydraulic liquid from reservoir 54 is directed to the piston pressure chamber 26 through lines 58 and 62, tracking regulator 50 and line 66. As a result, the piston pressure chamber is pressurized with the hydraulic liquid and piston head 16 is pushed downward with the selected set bed pressure $P_s$ so as to compress or pack the particulate material of substrate bed 36.

When the liquid chromatography process is initiated, process fluid (in this case, first a mobile phase liquid and later the liquid solution of crude material to be chromatographed) travels into the column through the process fluid port 34, passes through the substrate bed 36 and then through the process fluid passage 22 and out of the column. While this mode operation, with the process fluid port 34 serving as the column inlet and the process fluid passage 22 serving as the column outlet, will be assumed going forward, it should be understood that the flow may alternatively be routed to travel in the reverse direction with the liquid entering the column through the process fluid passage 22 and exiting the column through process fluid port 34.

As a result of the process fluid flowing through the substrate bed 36, a flow pressure $P_f$ acts on the bottom side of the piston head 16 in addition to the set bed pressure $P_s$. Left unaddressed, as in typical prior art systems with locked pistons, the piston head 16 would be unable to travel upward so as to reduce the additional flow pressure acting on the substrate bed 36. In the case of dynamic axial compression columns, especially with the use of soft and compressible substrate bed media, normal operation can require operating at high flow rates through the bed. This may require an increased piston pressure setting to keep the piston from moving. The increased piston pressure setting can be tolerated by the bed material as long as it is hydraulically cushioned by the incoming flow. When the flow rate is reduced or stopped, however, such piston pressure can exert physical pressure on the media that is beyond its physical ability to support, resulting in over compression of the media which closes the internal pore structure as well as resulting in breakage of the media substrate. As will now be explained, the system of Fig. 1 adds a pressure differential equal to $P_f$ to the piston pressure chamber 26. The system also reduces or eliminates the additional direct piston pressure in the absence of sufficient flow cushioning, which is particularly useful in cases where compressible or fragile media are subjected to the piston pressure.

The controller 68 is calibrated so that the pressure provided to the inlet of the tracking regulator 50 through line 62 actually equals the set bed pressure $P_s$ or an amount slightly above the maximum anticipated operating or process flow pressure $P_{fmax}$. This amount, preferably around 1-2 psi above $P_{fmax}$, is the overpressure point, the use of which will be explained below. The tracking regulator is calibrated so that, absent the flow of liquid through port 34, only hydraulic fluid sufficient to provide the set bed pressure $P_s$ is provided to the piston pressure chamber 26.

When the process fluid flow through the column is initiated, sensing diaphragm 42 senses the pressure of the fluid flowing through process fluid port 34 via capillary 44 and provides a sensed pressure input to the tracking regulator 50 via liquid-filled line 52. Tracking regulator 50 responds by increasing the amount of hydraulic fluid delivered from line 62 to the piston pressure chamber 26 through line 66 in proportion to the pressure sensed by the sensing diaphragm 42. Tracking regulator 50 is calibrated so that the additional hydraulic fluid, and thus pressure, delivered to the piston pressure chamber 26 causes the total bed pressure $P_t$ acting on the top side of the piston head 16 to equal the set bed $P_s$ pressure plus the process fluid flow pressure $P_f$ acting on the bottom side of the piston head. In other words, the tracking regulator adjusts the pressure that the piston head 16 applies to the substrate bed 36 according to the following equation:

$$P_t = P_s + P_f$$

where:

$P_t$ = total bed pressure
$P_s$ = set bed pressure
$P_f$ = process fluid flow pressure

The sensing diaphragm 42 senses both increases and decreases in the process fluid flow pressure. Any increases in the flow of fluid into the column, which result in corresponding increases in the flow pressure $P_f$ acting on the bottom side of the piston head 16, are reflected by the pressure sensed at port 34 by the sensing diaphragm and communicated to tracking regulator 50. The tracking regulator 50 reacts by increasing the pressure within the piston pressure chamber 26 so that the total bed pressure $P_t$ acting on the piston head continues to match the process flow pressure $P_f$ plus the set bed pressure $P_s$.

When the flow of processing fluid into the column through port 34 decreases, this information is transmitted to the tracking regulator via the sensing diaphragm 42, as described previously. The tracking regulator 50 responds by releasing pressure from piston pressure chamber 26 through line 66 and hydraulic fluid drain line 64. As a result, the hydraulic fluid travels back to the hydraulic fluid reservoir. The amount of fluid released is proportional to the pressure decrease sensed by the sensing diaphragm, and thus the tracking regulator. As a result, the total bed pressure $P_t$ is reduced corresponding to the reduction of the process fluid flow pressure $P_f$. In other words, the tracking regulator 50 reacts by decreasing the pressure within the piston pressure chamber 26 so that the total bed pressure $P_t$ acting on the piston head continues to match the process flow pressure $P_f$ plus the set bed pressure $P_s$.

When the flow of processing fluid into the column through port 34 reaches a level corresponding to the overpressure point, again as detected by the sensing diaphragm 42 via port 34, the tracking regulator, releases pressure from piston pressure chamber 26 through line 66 and hydraulic fluid drain line 64. As a result, the hydraulic fluid travels back to the hydraulic fluid reservoir. The amount of fluid released is such that the differential pressure added to the set bed pressure decreases so that it equals $P_{fmax}$. As a result, the tracking regulator 50 reacts by decreasing the pressure within the piston pressure chamber 26 so that the total bed pressure $P_t$ acting on the piston head matches the maximum anticipated process flow pressure $P_{fmax}$ plus the set bed pressure $P_s$.

In view of the above, the tracking regulator enables the total bed pressure to track the process fluid flow pressure so that the integrity of the substrate bed is maintained. Due to the purely fluid and mechanical linkages between port 34 and the tracking regulator 50, the responsiveness of the tracking regulator is nearly instantaneous, thus minimalizing the chances of risk to the substrate material.

As indicated in phantom at 70 in Fig. 1, the capillary leading to the sensing diaphragm 42 may alternatively be positioned at the opening 72 of process fluid passage 22. This configuration adapts the system for use in situations where the flow of process fluid enters the column through opening 72 (now the processing column inlet) process fluid passage 22, travels through substrate bed 36 and exits through port 34 (now the processing column outlet).

Suitable sensing diaphragms 42 and tracking regulators 50 are known in the art. As an example only, the SJS series regulator and 42 MW welded diaphragm instrument isolator available from Tescom Corporation of Elk River, Minnesota, are suitable for use as the tracking regulator 50 and sensing diaphragm 42, respectively. Preferably, the sensing diaphragm features a flow-through cell design rather than a t-off design, which may require some modification of off the shelf diaphragm instrument isolators.

In an alternative embodiment of the system of the present invention, indicated in general at 110 in Fig. 2, the piston pressure chamber is housed within an external driving column that operates on the piston rod, and thus the piston head of the processing column. More specifically, in the system 110 of Fig. 2, a processing column 112 includes a vertically disposed cylinder 114 within which is positioned a sliding piston featuring a processing column piston head 116 and a piston rod 118. A process fluid passage 122 is formed through the piston head. The processing column 112 features an open top end 124 through which the piston rod passes. The processing column is also provided with a bottom plate 132 having a process fluid port 134 formed therein.

An external driving column 125 is supported above the column 114 and contains a driving piston 127. A piston pressure chamber 126 is formed between the top of the driving column and the driving piston head.

A substrate bed 136 of particulate material is positioned between the bottom surface of the piston head and the bottom plate. The bed 136 may alternatively be a single piece (monolithic or membrane) bed or a liquid suspension of cells (such as is used in fermentation using yeast, or a bioreactor using plant of animal cells). The substrate bed 136 may be porous or non-porous and may include polymeric material or gel, including a base structure that is constructed from cellulose, methacrylate, divinyl benzene, silica, zeolite, titanium or is of the type used in any other separation medium.

The system of Fig. 2 includes a sensing diaphragm 142 that is in fluid communication with port 134 of the processing column 112 via a capillary line 144 containing a fluid such as air or a liquid. The system also includes a tracking regulator 150 which features a pressure sensing input 151 that is in fluid communication with the sensing diaphragm 142 via a liquid-filled line 152. As described above with regard to the embodiment of Fig. 1, the tracking regulator also allows a bias pressure to be added to the pressure acting on the piston head 116 based on the process liquid flow pressure feedback provided by sensing diaphragm 142.

A hydraulic liquid reservoir 154 communicates with the inlet of a hydraulic pump 156 via line 158, while the outlet of the pump communicates with a hydraulic fluid inlet 160 of the tracking regulator 150 via line 162. The tracking regulator is also in fluid communication with the hydraulic liquid reservoir 154 via a hydraulic fluid drain port and line, indicated at 163 and 164, respectively. The tracking regulator 150 also features a hydraulic fluid outlet 165 that is in fluid communication with the piston pressure chamber 126 of the external driving column via line 166. The operation of pump 156 is controlled by electronic controller 168. Electronic controller 168 may be a microprocessor or any other electronic control device known in the art.

The components of the system of Fig. 2 operate in the same fashion as described above for the system of Fig. 1, with the process fluid port serving as the processing column inlet and the process fluid passage 122 serving as the processing column outlet. The only difference is that the piston pressure chamber is positioned in a driving column 125 that is external to the processing column 112.

As indicated in phantom at 170 in Fig. 2, the capillary leading to the sensing diaphragm 142 may alternatively be positioned at the opening 172 of process fluid passage 122. This configuration adapts the system for use in situations where the flow of process fluid enters the column through opening 72 (now serving as the processing column inlet) and process fluid passage 122, travels through substrate bed 136 and exits through port 134 (now serving as the processing column outlet).

The system and method of the present invention may be used with any fluid processing process and associated column that features an internal piston head that applies a pressure to a bed. Examples of such fluid processes and equipment include, but are not limited to, chromatography columns (liquid, supercritical fluids, gas), capture columns, flow through synthesizer columns and bioreactor/fermentor columns (in which case the bed is a liquid suspension of cells). Such processes may be used in a variety of applications including, but not limited to, biological and chemical applications.

The present invention therefore offers a pressure tracking system that maintains integrity of the bed by the nearly instantaneous adjustment of the system hydraulic pressure to exceed the process fluid pressure by the set bed pressure. Fluctuations in the bed volume, due to settling, shrinking and swelling are automatically remedied by either adding hydraulic liquid to the piston pressure chamber or relieving liquid back to the hydraulic fluid reservoir.

While the preferred embodiments of the invention have been shown and described, it will be apparent to those skilled in the art that changes and modifications may be made therein without departing from the spirit of the invention, the scope of which is defined by the appended claims.

## Claims

1. A system for controlling a bed pressure of a processing column, where a piston pressure chamber causes a piston head of the processing column to apply the bed pressure to a bed of the processing column and where the processing column features an inlet and an outlet in fluid communication with the bed, the system comprising:

    a) a source of pressurized hydraulic fluid;
    b) a tracking regulator having a pressure sensing input, a hydraulic fluid inlet in fluid communication with the source of pressurized hydraulic fluid and a hydraulic fluid outlet adapted for fluid communication with the piston pressure chamber;
    c) said tracking regulator pressure sensing input adapted for fluid communication with the processing column inlet so that the tracking regulator may receive a pressure of a process fluid flow into the processing column; and
    d) said tracking regulator responding to changes in the pressure of the process fluid flow by adjusting a pressure of the piston pressure chamber.

2. A processing column system comprising:

    a) a processing column featuring an inlet, an outlet and a processing column piston head, said processing column also including a bed positioned adjacent to said processing column piston head and in fluid communication with the processing column inlet and outlet,
    b) a piston pressure chamber for causing the processing column piston head to provide a bed pressure to the bed;
    c) a source of pressurized hydraulic fluid;
    d) a tracking regulator having a pressure sensing input, a hydraulic fluid inlet in fluid communication with the source of pressurized hydraulic fluid and a hydraulic fluid outlet in fluid communication with the piston pressure chamber;
    e) said tracking regulator pressure sensing input in fluid communication with the processing column inlet so that the tracking regulator may receive a pressure of a process fluid flow into the processing column; and
    f) said tracking regulator responding to changes in the pressure of the process fluid flow by adjusting a pressure of the piston pressure chamber.

3. The system of claim 2 wherein the piston pressure chamber is internal to the processing column and positioned between the processing column piston head and a top plate of the processing column.

4. The system of claim 2 further comprising a piston rod connected to the processing column piston on a first end of the piston rod and an external driving column containing a driving piston with the piston pressure chamber positioned adjacent to the driving piston within the external driving column, said driving piston connected to the piston rod on a second end of the piston rod opposite the first end.

5. The system of claim 2 wherein the column inlet includes a process fluid port and further comprising a rod connected to the piston head wherein the column outlet includes a fluid passage formed through said rod.

6. The system of claim 2 wherein the column outlet includes a process fluid port and further comprising a rod connected to the piston head wherein the column inlet includes a fluid passage formed through said rod.

7. The system of claim 1 or 2 wherein the tracking regulator includes a hydraulic fluid drain port and further comprising a hydraulic fluid drain line in fluid communication with the hydraulic fluid drain port of the tracking regulator and the source of pressurized hydraulic fluid, said tracking regulator adapted to direct hydraulic fluid from the piston pressure chamber to the hydraulic fluid drain line and the source of pressurized hydraulic fluid when the tracking regulator detects a drop in the pressure of the process fluid flow.

8. The system of claim 1 or 2 wherein the source of pressurized hydraulic fluid includes a hydraulic liquid reservoir and a pump having an inlet in fluid communication with the hydraulic liquid reservoir and an outlet in fluid communication with the hydraulic fluid inlet of the tracking regulator.

9. The system of claim 8 further comprising an electronic controller connected to and controlling the pump so that a set bed pressure may be entered into the controller.

10. The system of claim 1 or 2 further comprising a sensing diaphragm in fluid communication with the pressure sensing input of the tracking regulator and adapted for fluid communication with the processing column input so that the tracking regulator may receive the pressure of the process fluid flow into the processing column.

11. The system of claim 10 further comprising a capillary in fluid communication with the sensing diaphragm and adapted for fluid communication with the processing column input so that the sensing diaphragm and the tracking regulator may receive the pressure of the process fluid flow into the processing column.

12. The system of claim 1 or 2 wherein the source of pressurized hydraulic fluid provides to the hydraulic fluid input of the tracking regulator a pressure equal to a set bed pressure of the system plus a maximum anticipated process flow pressure, said tracking regulator adapted to direct additional hydraulic fluid from the source of pressurized hydraulic fluid to the piston pressure chamber so that a pressure therein is greater than the set bed pressure when the tracking regulator detects an increase in the pressure of the process fluid flow.

13. A method of controlling a bed pressure of a processing column, where a piston pressure chamber causes a piston head of the processing column to apply the bed pressure to a bed of the processing column and where the processing column features an inlet and an outlet in fluid communication with the bed, the method comprising the steps of:

   a) providing pressurized hydraulic fluid to the piston pressure chamber from a source of pressurized hydraulic fluid through a tracking regulator;
   b) sensing a pressure of a process fluid flow into the processing column with the tracking regulator; and
   c) adjusting a pressure of the piston pressure chamber using the tracking regulator based on the sensed pressure of the process fluid flow.

14. The method of claim 13 wherein the tracking regulator includes a hydraulic fluid drain port and further comprising a hydraulic fluid drain line in fluid communication with the hydraulic fluid drain port of the tracking regulator and the source of pressurized hydraulic fluid, and further comprising the step of directing hydraulic fluid from the piston pressure chamber to the hydraulic fluid drain line and the source of pressurized hydraulic fluid when the tracking regulator detects a drop in the pressure of the process fluid flow.

15. The method of claim 13 wherein the source of pressurized hydraulic fluid provides to the tracking regulator a pressure equal to a set bed pressure of the system plus a maximum anticipated process flow pressure, and further comprising the step of directing additional hydraulic fluid from the source of pressurized hydraulic fluid to the piston pressure chamber so that a resulting pressure therein is greater than the set bed pressure when the tracking regulator detects an increase in the pressure of the process fluid flow.

**FIG. 1**

**FIG. 2**